# EUROPÄISCHE PATENTSCHRIFT

(11) **EP 3 767 122 B1**
(45) Veröffentlichungstag und Bekanntmachung des Hinweises auf die Patenterteilung: **21.09.2022**
(21) Anmeldenummer: 20184988.2
(22) Anmeldetag: 09.07.2020
(51) Int. Cl.: F16D 23/04

(54) **SYNCHRONISIERUNGSEINHEIT FÜR EIN SCHALTGETRIEBE**
SYNCHRONIZING UNIT FOR A GEARBOX
UNITÉ DE SYNCHRONISATION POUR UNE BOÎTE DE VITESSES

(30) Priorität: 17.07.2019 DE 102019119400
(43) Veröffentlichungstag der Anmeldung: 20.01.2021
(73) Patentinhaber: HOERBIGER Antriebstechnik Holding GmbH, 86956 Schongau (DE)
(72) Erfinder: Völk, Wolfgang, 86956 Schongau (DE); Dempfle, Andreas, 86956 Schongau (DE); Binder, Jürgen, 86956 Schongau (DE); Fürguth, Werner, 86956 Schongau (DE); Fischer, Patrick, 86956 Schongau (DE)
(74) Vertreter: Prinz & Partner mbB

(56) Entgegenhaltungen:
- EP-A1- 1 671 045
- EP-A2- 2 003 356
- DE-A1- 2 706 661
- DE-A1-102011 016 531
- DE-A1-102015 206 329
- DE-B3-102016 108 701
- US-A- 5 113 986

## Beschreibung

Das Gebiet der Erfindung betrifft eine Synchronisierungseinheit gemäß dem Oberbegriff des Anspruchs 1.

Solche Synchronisierungseinheiten sind aus dem Stand der Technik bekannt und unterliegen einem ständigen Kostendruck, sodass allgemein angestrebt wird, diese einfach und kostengünstig aufzubauen.

Beispielsweise zeigt die EP 2 003 356 A2 eine Synchronisierungseinheit gemäß dem Oberbegriff des Anspruchs 1.

Ferner ist aus der DE 10 2016 108 701 B3 eine Schaltvorrichtung für ein Kraftfahrzeuggetriebe bekannt geworden, in der Reibringe und Federelemente zum Einsatz kommen.

Die Vereinfachung des Aufbaus von Synchronisierungseinheiten findet jedoch dahingehend eine Grenze, dass Schwingungen innerhalb der Synchronisierungseinheiten vermieden werden sollen. Dies ist insbesondere bei sehr hohen Drehzahlen von Bedeutung. Bauteilschwingungen innerhalb der Synchronisierungseinheiten führen einerseits zu einer unerwünschten Geräuschentwicklung und andererseits zu unerwünschten Beschädigungen von Bauteilen der Synchronisierungseinheit.

Ein weiteres Ziel bei der Entwicklung von Synchronisierungseinheiten ist üblicherweise ein geringer Bauraumbedarf, also ein kompakter Aufbau der Synchronisierungseinheit.

Vor diesem Hintergrund ist es die Aufgabe der Erfindung, eine verbesserte Synchronisierungseinheit anzugeben. Diese soll insbesondere einfach und kostengünstig aufgebaut sein, unerwünschte Schwingungen vermeiden und einen geringen Bauraumbedarf aufweisen.

Die Aufgabe wird durch eine Synchronisierungseinheit gemäß Anspruch 1 gelöst. Dabei ist der Synchronring mittels des Rückstellfederelements in Richtung seiner Lüftungsstellung federbeaufschlagt. Für den Fall, dass die Synchronisierungseinheit in ihrer Neutralstellung ist, also nicht geschaltet ist, wird der Synchronring folglich zuverlässig in der Lüftungsstellung gehalten. Dadurch werden unerwünschte Schleppmomente vermieden. Indem das Rückstellfederelement sowohl mit dem Synchronring als auch mit der Nabe gekoppelt ist, werden ferner Relativbewegungen des Synchronrings gegenüber der Nabe vermieden. Dadurch werden unerwünschte Schwingungen und Geräusche unterbunden sowie Schleppmomente reduziert.

Erfindungsgemäß ist das Rückstellfederelement ringförmig. Ein solches Rückstellfederelement ist einfach aufgebaut und lässt sich dadurch einfach herstellen. Darüber hinaus bewirkt eine ringförmige Gestaltung, dass das Rückstellfederelement mit einer vergleichsweise geringen Unwucht oder ohne Unwucht ausgeführt werden kann. Dadurch wird die Funktion der Synchronisierungseinheit und insbesondere des Rückstellfederelements von einer Drehzahl der Synchronisierungseinheit nur wenig oder überhaupt nicht beeinflusst. Die Synchronisierungseinheit funktioniert also bei allen Drehzahlen zuverlässig, insbesondere bei hohen Drehzahlen.

Das Rückstellfederelement kann ferner eine Vorsynchronisierungseinheit darstellen. Ausgehend von einer Neutralstellung der Synchronisierungseinheit wird nämlich bei einer Betätigung der Schiebemuffe zunächst der der Betätigungsrichtung zugeordnete Synchronring über das zugeordnete Rückstellfederelement derart in Axialrichtung bewegt, dass er in Reibkontakt mit einem zugehörigen Reibkonusabschnitt eines zu schaltenden Kupplungskörpers oder Gangrads gelangt. Dieser Reibkontakt bewirkt, dass sich der Synchronring in seine sogenannte Sperrstellung oder Indexstellung verdreht. In dieser Stellung stehen sich die Zähne des Sperrverzahnungsabschnitts des Synchronrings und die Zähne der Innenverzahnung der Schiebemuffe, d.h. der Schiebemuffenverzahnung, in Axialrichtung zumindest abschnittsweise gegenüber.

Dabei kann das Rückstellfederelement als umgeformtes Blech gebildet sein. Solche Rückstellfederelemente sind besonders einfach und kostengünstig herstellbar. Dies gilt insbesondere für hohe Stückzahlen. Ferner lassen sich bei umgeformten Blechteilen vorgegebene Toleranzen leicht einhalten. Bevorzugt sind die Sperrringe dabei aus Federblech hergestellt. Weiter vorzugsweise ist das Rückstellfederelement einstückig ausgeführt. Es wird also aus einem einzigen Blechabschnitt umgeformt. Ein derartiges Rückstellfederelement beansprucht zudem nur einen kleinen Bauraum.

Gemäß einer Ausführungsform umfasst das Rückstellfederelement einen im Wesentlichen zylindermantelförmigen oder kegelmantelförmigen Lagerabschnitt und der Lagerabschnitt liegt an der Nabe an. Dadurch befindet sich das Rückstellfederelement gegenüber der Nabe in einer definierten Lage. Es ist also dazu geeignet, auch andere Bauteile relativ zur Nabe zu positionieren. Dies gilt insbesondere für den Synchronring. Auf diese Weise können unerwünschte Schwingungen reduziert oder ganz vermieden werden.

Alternativ oder zusätzlich weist das Rückstellfederelement einen sich im Wesentlichen in Radialrichtung erstreckenden Anlageabschnitt auf und der Anlageabschnitt ist einem Sperrverzahnungsabschnitt des Synchronrings benachbart angeordnet. Insbesondere kann der Anlageabschnitt am Sperrverzahnungsabschnitt des Synchronrings anliegen. Dadurch ergibt sich eine vorgegebene Relativposition des Synchronrings zum Rückstellfederelement. Dies gilt insbesondere in der Neutralstellung. Auch auf diese Weise können unerwünschte Schwingungen vermieden werden.

Das Rückstellfederelement kann in Umfangsrichtung mit der Nabe gekoppelt sein, indem zumindest eine im Wesentlichen radial vom Rückstellfederelement abstehende Lasche in eine Ausnehmung an der Nabe eingreift. Das Rückstellfederelement ist also drehfest mit der Nabe gekoppelt. Mit anderen Worten beschränken sich Relativdrehungen zwischen dem Rückstellfederelement und der Nabe auf solche Bewegungen, die aus einer elastischen Verformung des Rückstellfederelements resultieren. Es wird folglich die Entstehung unerwünschter Geräusche sowie unerwünschter Schwingungen vermieden.

Vorteilhafterweise hat dabei das Rückstellfederelement zwei im Wesentlichen radial abstehende Laschen und die Laschen liegen jeweils an entgegengesetzten, in Umfangsrichtung weisenden Wänden der Ausnehmung an der Nabe an. Damit ist das Rückstellfederelement über eine erste der Laschen in einer ersten Drehrichtung drehfest mit der Nabe gekoppelt und über die andere der Laschen in einer zweiten, entgegengesetzten Drehrichtung. Es ergibt sich so in Umfangsrichtung eine definierte Lage des Rückstellfederelements gegenüber der Nabe. Es werden damit unerwünschte Relativbewegungen und Schwingungen vermieden.

Gemäß einer Variante ist zumindest eine der in Umfangsrichtung weisenden Wände gegenüber einer Axialrichtung geneigt, insbesondere wobei beide in Umfangsrichtung weisenden Wände gegenüber einer Axialrichtung geneigt sind, sodass ein in Umfangsrichtung gemessener Abstand der in Umfangsrichtung weisenden Wände an einem dem Rückstellfederelement benachbarten Axialende der Nabe kleiner ist als an einem vom Rückstellfederelement weg weisenden Axialende der Nabe. Nachdem entsprechend der vorstehenden Erläuterungen die im Wesentlichen radial abstehenden Laschen an den Wänden der Ausnehmung anliegen, sind in diesem Zusammenhang vorzugsweise auch die Laschen gegenüber einer Axialrichtung geneigt, sodass diese weiterhin im Wesentlichen flächig an den zugeordneten Wänden anliegen. Durch die Neigung der Wände lässt sich auf einfache Weise eine Rückstellfunktion realisieren. Wird das Rückstellfederelement von der Nabe weg bewegt, müssen sich aufgrund der Orientierung der Wände die beiden im Wesentlichen radial abstehenden Laschen aufeinander zu bewegen. Dies geschieht unter elastischer Verformung des Rückstellfederelements. Es wird somit eine elastische Rückstellkraft generiert, mittels der die beiden Laschen in Richtung eines vergrößerten Abstands vorgespannt sind. Wenn also das Rückstellfederelement nicht mehr aktiv von der Nabe weg bewegt wird, stellt es sich somit selbsttätig zurück. Nachdem das Rückstellfederelement gemäß der obigen Erläuterungen auch mit dem Synchronring gekoppelt ist, wird auch der Synchronring in eine Stellung zurückgestellt, in der er vergleichsweise nahe an der Nabe liegt. Dies entspricht seiner Lüftungsstellung.

Das Rückstellfederelement kann auch eine Umfangslücke aufweisen und die Lasche oder die Laschen kann bzw. können an einem Rand der Umfangslücke positioniert sein. Das Rückstellfederelement ist also umfangsmäßig nicht vollständig umlaufend. Eine Umfangslücke stellt dabei ein einfaches Mittel dar, eine Beweglichkeit der Laschen in Umfangsrichtung zu ermöglichen. Dabei wird insbesondere ermöglicht, dass sich die Laschen aufeinander zu bewegen. Auf diese Weise lässt sich die bereits erläuterte Rückstellfunktion besonders einfach umsetzen.

In einer Ausführungsform ist das Rückstellfederelement in Axialrichtung mit der Nabe gekoppelt, indem zumindest eine im Wesentlichen axial vom Rückstellfederelement abstehende Lasche einen Bereich der Nabe in Axialrichtung hintergreift. Auf diese Weise wird das Rückstellfederelement mit Bezug auf die Nabe in einer definierten Position gehalten. Somit können unerwünschte Relativbewegungen und Schwingungen vermieden werden. In einer bevorzugten Ausführungsform kann dabei eine radiale Tiefe, mit der die im Wesentlichen axial vom Rückstellfederelement abstehende Lasche den Bereich der Nabe hintergreift unter Ausnutzung einer Elastizität der Lasche variabel gestaltet sein. In diesem Zusammenhang ist der Bereich der Nabe, den die Lasche hintergreift vorzugsweise eine Fläche mit einer Axialkomponente, einer Umfangs- oder Tangentialkomponente und einer Radialkomponente. Mit anderen Worten ist die Fläche gegenüber einer Axialrichtung geneigt, wenn sie in Umfangsrichtung betrachtet wird. Damit bewirkt eine Bewegung des Rückstellfederelements in Axialrichtung weg von der Nabe, dass die Lasche sich radial verformt und an der Fläche abgleitet. Auf diese Weise wird eine zusätzliche Rückstellfunktion in Axialrichtung realisiert.

Vorzugsweise ist dabei die im Wesentlichen axial abstehende Lasche nach radial innen abgeknickt und übergreift von radial außen eine zugeordnete Fläche an der Nabe. Eine derartige Kopplung ist besonders platzsparend.

Bevorzugt sind die im Wesentlichen axial vom Rückstellfederelement abstehende Lasche und die im Wesentlichen radial vom Rückstellfederelement abstehende Lasche bzw. abstehenden Laschen im Wesentlichen diametral entgegengesetzt angeordnet. Dadurch ist das Rückstellfederelement einfach und kostengünstig herstellbar. Ferner ergibt sich so ein vergleichsweise kleiner Bauraumbedarf, insbesondere in Radialrichtung.

Das Rückstellfederelement kann in eine Radialaufnahme am Synchronring eingreifen. Eine solche Radialaufnahme bildet einen in Axialrichtung wirkenden Hinterschnitt. Somit ist das Rückstellfederelement in Axialrichtung mit dem Synchronring gekoppelt. Dadurch wird der Synchronring in Axialrichtung an der Nabe gehalten oder in Richtung der Nabe mittels des Rückstellfederelements federbeaufschlagt.

In einer Variante ist die Radialaufnahme durch einen vollständig oder segmentiert umlaufenden Synchronringbund oder durch zumindest einen Haltenocken gebildet. Die Radialaufnahme ist dann zwischen dem Radialbund oder dem Haltenocken und dem Sperrverzahnungsabschnitt des Synchronrings vorgesehen. Die Radialaufnahme kann auch durch mehrere Haltenocken gebildet sein. Solche Radialaufnahmen sind einfach und kostengünstig herstellbar. Zudem erlauben sie ein zuverlässiges Halten des Rückstellfederelements am Synchronring.

Bevorzugt ist der Synchronringbund dabei segmentiert, wobei die einzelnen Segmente durch in Axialrichtung angeschobene Bereiche des Reibkonusabschnitts realisiert sind. Für den Fall, dass die Radialaufnahme durch einen Haltenocken gebildet ist, wird der Haltenocken bevorzugt als nach radial außengebogener Bereich des Reibkonusabschnitts realisiert. In beiden Varianten ergibt sich eine Abmessung, insbesondere radiale Abmessung, des Synchronringbundes und des Haltenockens dadurch, dass das Rückstellfederelement auch im verformten Zustand noch zuverlässig mit dem Synchronring gekoppelt sein muss.

Gemäß einer Alternative sind zwei Synchronringe vorgesehen, die durch eine axiale Betätigung der Schiebemuffe wahlweise mit einem jeweils zugeordneten Gangrad koppelbar sind, und zwei Rückstellfederelemente vorgesehen, wobei ein erstes der Rückstellfederelemente mit einem ersten der Synchronringe und mit der Nabe gekoppelt ist und ein zweites der Rückstellfederelemente mit einem zweiten der Synchronringe und mit der Nabe gekoppelt ist. Eine solche Synchronisierungseinheit kann also in zwei Richtungen betätigt werden und ist somit dafür geeignet, zwei unterschiedliche Gänge zu schalten. Die bereits erläuterten Effekte und Vorteile ergeben sich in beide Schaltrichtungen.

Dabei können die Rückstellfederelemente als Gleichteile ausgeführt sein und insbesondere um 180° gegeneinander verdreht sowie bezüglich einer senkrecht zur Mittelachse verlaufenden Mittelebene der Synchronisierungseinheit gespiegelt verbaut sein. Auf diese Weise lassen sich die Rückstellfederelemente besonders kostengünstig herstellen. Zudem wird so ein vergleichsweise geringer Bauraumbedarf sichergestellt.

Die Erfindung wird nachstehend anhand eines Ausführungsbeispiels erläutert, das in den beigefügten Zeichnungen gezeigt ist. Es zeigen:
- Figur 1 eine erfindungsgemäße Synchronisierungseinheit in einer Explosionsdarstellung,
- Figur 2 die Synchronisierungseinheit aus Figur 1 in einer Schnittdarstellung,
- Figur 3 die Synchronisierungseinheit aus den Figuren 1 und 2 in einer perspektivischen Darstellung, wobei die Kupplungskörper und die Schiebemuffe nicht zu sehen sind,
- Figur 4 die Darstellung aus Figur 3, wobei zusätzlich die Synchronringe fortgelassen sind,
- Figur 5 ein Detail V der Synchronisierungseinheit aus Figur 2,
- Figur 6 eine Ansicht der Synchronisierungseinheit aus Figur 5 entlang der Richtung VI,
- Figur 7 die Synchronringe und die zugehörigen Rückstellfederelemente der Synchronisierungseinheit aus den Figuren 1 bis 3 in einer isolierten Darstellung,
- Figur 8 einen der Synchronringe und das zugehörige Rückstellfederelement aus Figur 7 in einer isolierten Darstellung,
- Figur 9 eine der Figur 5 vergleichbare Darstellung der Synchronisierungseinheit, wobei der Schnitt an einer anderen Stelle platziert ist, und
- Figur 10 eine der Figur 9 vergleichbare Darstellung, wobei der Schnitt im Bereich einer Koppelung zwischen den Synchronringen und den zugeordneten Rückstellfederelementen platziert ist.

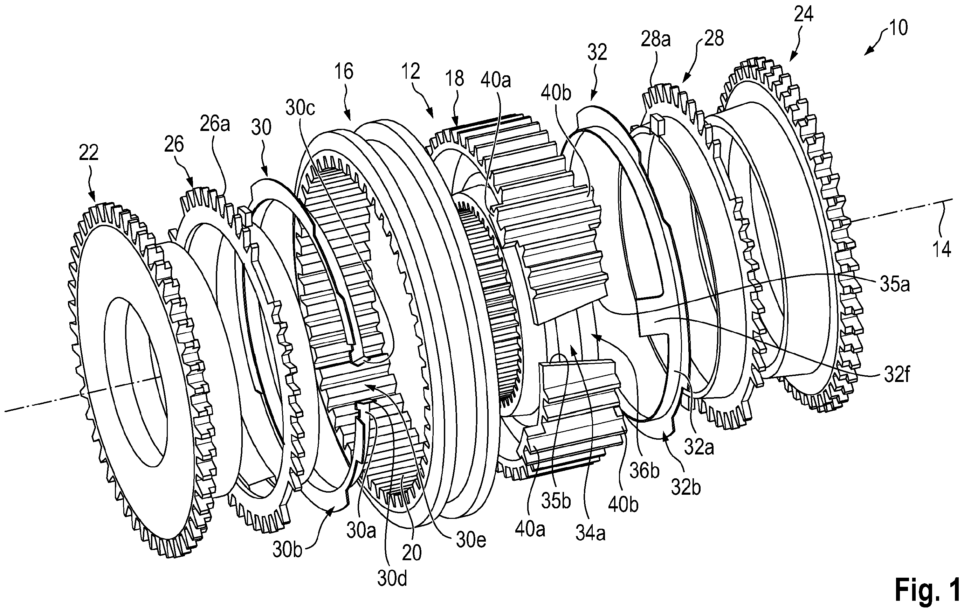

Figur 1 zeigt eine Synchronisierungseinheit 10 für ein Schaltgetriebe.

Diese umfasst eine drehfest und axialfest mit einer Getriebewelle koppelbare Nabe 12, die um eine Mittelachse 14 drehbar ist.

Eine Schiebemuffe 16 ist drehfest und axial verschiebbar mit der Nabe 12 gekoppelt. Zu diesem Zweck weist die Nabe 12 eine Außenverzahnung 18 auf und die Schiebemuffe 16 eine Innenverzahnung 20. Die Außenverzahnung 18 und die Innenverzahnung 20 stehen miteinander im Eingriff.

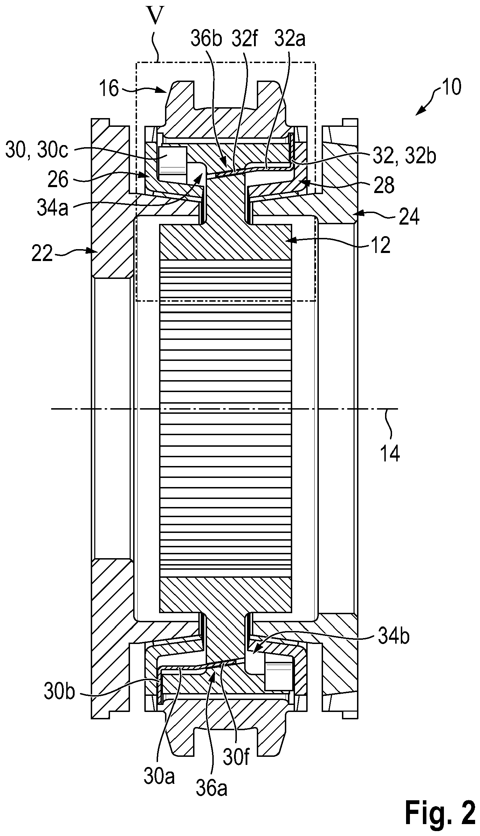

Die Synchronisierungseinheit 10 ist im dargestellten Ausführungsbeispiel als beidseitig betätigbare Synchronisierungseinheit 10 ausgeführt (siehe auch Figur 2).

Vor diesem Hintergrund kann durch eine Verschiebung der Schiebemuffe 16 wahlweise ein erster Kupplungskörper 22 oder ein zweiter Kupplungskörper 24 drehfest mit der Nabe 12 gekoppelt werden.

Damit diese Kopplung nur bei synchronisierten Drehzahlen erfolgen kann, ist dem ersten Kupplungskörper 22 ein erster Synchronring 26 zugeordnet und dem zweiten Kupplungskörper 24 ein zweiter Synchronring 28.

Beide Synchronringe 26, 28 sind in bekannter Weise durch eine axiale Betätigung der Schiebemuffe 16 reibschlüssig mit dem jeweils zugeordneten Kupplungskörper 22, 24 und damit mit einem dem Kupplungskörper 22, 24 zugeordneten Gangrad koppelbar.

Darüber hinaus umfasst die Synchronisierungseinheit 10 ein erstes Rückstellfederelement 30, das mit dem ersten Synchronring 26 und mit der Nabe 12 gekoppelt ist.

Ferner ist ein zweites Rückstellfederelement 32 vorgesehen, das mit dem zweiten Synchronring 28 und der Nabe 12 gekoppelt ist.

Im dargestellten Ausführungsbeispiel sind die Rückstellfederelemente 30, 32 als Gleichteile ausgeführt. Dabei sind sie innerhalb der Synchronisierungseinheit 10 um 180° gegeneinander verdreht sowie bezüglich einer senkrecht zur Mittelachse 14 verlaufenden Mittelebene gespiegelt angeordnet.

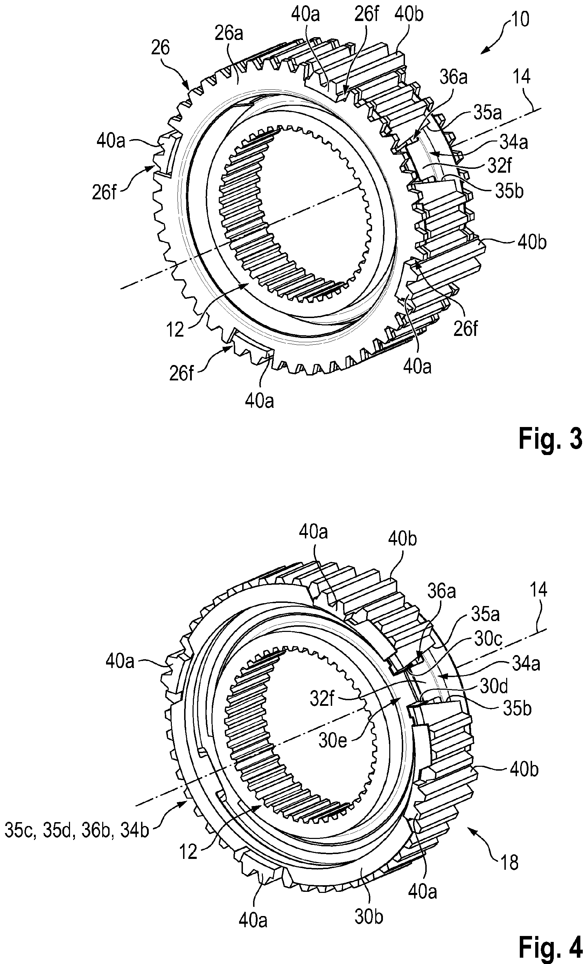

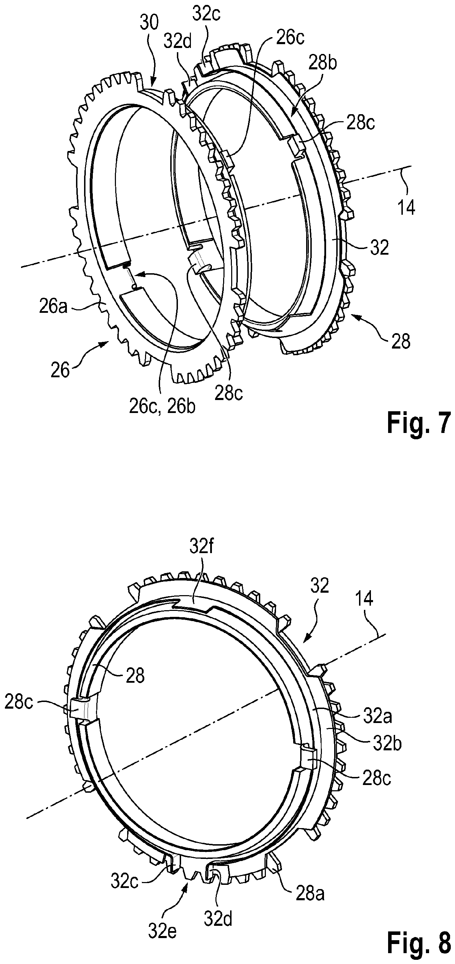

Wie insbesondere den Figuren 4, 7 und 8 entnommen werden kann, sind die Rückstellfederelemente 30, 32 ringförmig.

Außerdem sind die Rückstellfederelemente 30, 32 als umgeformte Bleche gebildet.

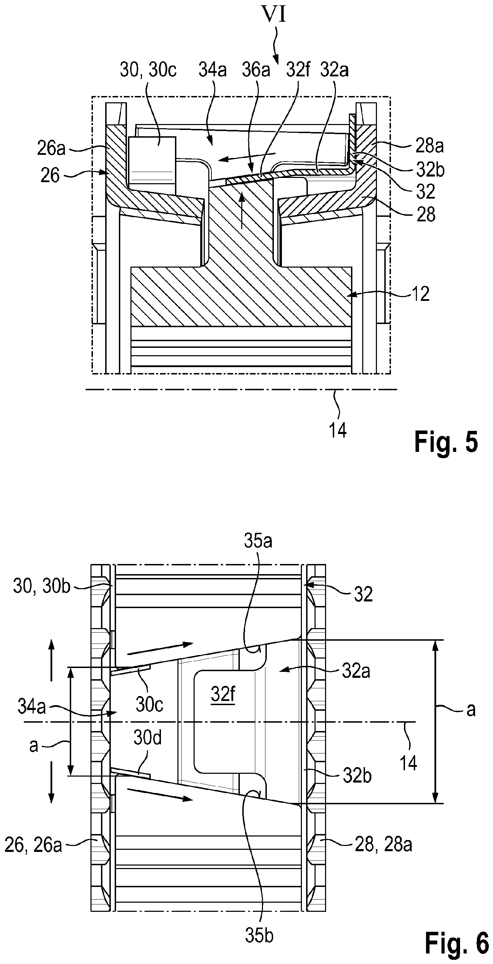

Dabei weist jedes der Rückstellfederelemente 30, 32 einen im Wesentlichen zylindermantelförmigen Lagerabschnitt 30a, 32a auf. Beide Lagerabschnitte 30a, 32a liegen an der Nabe 12 an (siehe insbesondere Figuren 2 und 5).

Des Weiteren weist jedes der Rückstellfederelemente 30, 32 einen sich im Wesentlichen in Radialrichtung erstreckenden Anlageabschnitt 30b, 32b auf, der dem Sperrverzahnungsabschnitt 26a, 28a des jeweils zugeordneten Synchronrings 26, 28 benachbart angeordnet ist.

Beide Rückstellfederelemente 30, 32 sind in Umfangsrichtung mit der Nabe 12 gekoppelt.

Dafür ist an der Nabe 12 eine Ausnehmung 34a vorgesehen, an deren in Umfangsrichtung weisenden Wänden 35a, 35b jeweils eine im Wesentlichen radial abstehende Lasche 30c, 30d des ersten Rückstellfederelements 30 anliegt (siehe Figur 6).

Dabei sind die beiden Laschen 30c, 30d als Ränder einer Umfangslücke 30e ausgebildet.

In eine Ausnehmung 34b greifen in analoger Weise im Wesentlichen radial abstehende Laschen 32c, 32b des zweiten Rückstellfederelements 32 ein. Diese Laschen 32c, 32d liegen an den entgegengesetzten, in Umfangsrichtung weisenden Wänden 35c, 35d der Ausnehmung 34b an.

Auch die Laschen 32c, 32d sind als Ränder einer Umfangslücke 32e ausgebildet.

In diesem Zusammenhang sind beide in Umfangsrichtung weisenden Wände 35a, 35b, 35c, 35d beider Ausnehmungen 34a, 34b gegenüber einer Axialrichtung geneigt.

Dabei sind die in Umfangsrichtung weisenden Wände 35c, 35d der Ausnehmung 34a derart geneigt, dass ein in Umfangsrichtung gemessener Abstand a zwischen diesen Wänden 35a, 35b an einem dem Rückstellfederelement 30 benachbarten Axialende der Nabe 12 kleiner ist als an einem vom Rückstellfederelement 30 weg weisenden Axialende der Nabe 12.

Die in Umfangsrichtung weisenden Wände 35c, 35d der Ausnehmung 34b sind so geneigt, dass ein in Umfangsrichtung gemessener Abstand zwischen diesen Wänden 35c, 35d an einem dem zweiten Rückstellfederelement 32 benachbarten Axialende der Nabe 12 kleiner ist als an einem vom Rückstellfederelement 32 weg weisenden Axialende der Nabe 12.

Mit anderen Worten sind die Wände 35a, 35b, 35c, 35d der Ausnehmungen 34a, 34b derart schräg gestaltet, dass die Rückstellfederelemente 30, 32 aufgrund ihrer Elastizität in Richtung der Nabe 12 federbelastet sind.

Beide Rückstellfederelemente 30, 32 sind darüber hinaus in Axialrichtung mit der Nabe 12 gekoppelt.

Dafür ist am ersten Rückstellfederelement 30 eine im Wesentlichen axial abstehende Lasche 30f vorgesehen, die einen zugeordneten Bereich 36a der Nabe 12 in Axialrichtung hintergreift (vgl. Figuren 5 und 6).

Am zweiten Rückstellfederelement 32 ist eine im Wesentlichen axial abstehende Lasche 32f vorgesehen, die einen Bereich 36b der Nabe 12 in Axialrichtung hintergreift.

Dabei ist der Bereich 36a an der Nabe 12 an einer Umfangsposition angeordnet, die zwischen den Wänden 35a, 35b der Ausnehmung 34a liegt. Mit anderen Worten stellt der Bereich 36a eine radiale Grundfläche der Ausnehmung 34a dar.

Der Bereich 36b ist an einer Umfangsposition angeordnet, die zwischen den Wänden 35c, 35d der Ausnehmung 34b liegt. Es stellt also der Bereich 36b eine radiale Grundfläche der Ausnehmung 34b dar.

Dabei sind beide Bereiche 36a, 36b als Flächen ausgeführt, die neben einer Axialkomponente und einer Umfangskomponente auch eine Radialkomponente haben. Mit anderen Worten sind beide Flächen nach radial innen geneigt.

Dementsprechend sind auch zumindest Endabschnitte der Laschen 30f, 32f radial nach innen geneigt, sodass diese in einer Neutralstellung der Synchronisierungseinheit 10 im Wesentlichen flächig an den jeweils zugeordneten Bereichen 36a, 36b anliegen.

Mit Bezug auf den Umfang der Rückstellfederelemente 30, 32 sind die im Wesentlichen in Axialrichtung abstehenden Laschen 30f, 32f den im Wesentlichen radial abstehenden Laschen 30c, 30d, 32c, 32d diametral entgegengesetzt angeordnet.

Die Rückstellfederelemente 30, 32 sind auch am jeweils zugeordneten Synchronring 26, 28 befestigt.

Hierfür greift das erste Rückstellfederelement 30 in eine Radialaufnahme 26b des ersten Synchronrings 26 ein.

Das zweite Rückstellfederelement 32 greift in eine Radialaufnahme 28b des zweiten Synchronrings 28 ein.

Dabei sind die Radialaufnahmen 26b, 28b jeweils durch Haltenocken 26c, 28c gebildet, die radial nach außen abgebogene Abschnitte des jeweiligen Reibkonusabschnitts des zugeordneten Synchronrings 26, 28 darstellen. Die Radialaufnahmen 26b, 28b stellen somit in Axialrichtung wirkende Hinterschnitte für die jeweils zugeordneten Rückstellfederelemente 30, 32 dar.

Damit mittels der Rückstellfederelemente 30, 32 auch eine Zentrierung der Synchronringe 26, 28 an der Nabe 12 bewirkt werden kann, sind an der Nabe 12 Zentrierflächen 38a, 38b vorgesehen, die ringförmig um die Mittelachse 14 umlaufen und neben einer Radialkomponente auch eine Axialkomponente aufweisen.

Eine Flächennormale der Zentrierflächen 38a, 38b ist somit gegenüber einer Axialrichtung nach radial außen gekippt, wenn sie in Umfangsrichtung betrachtet wird.

An den Zentrierflächen 38a, 38b liegen in der Neutralstellung der Synchronisierungseinheit 10 in flächiger Weise Anlageflächen 26d, 28d der zugeordneten Synchronringe 26, 28 an.

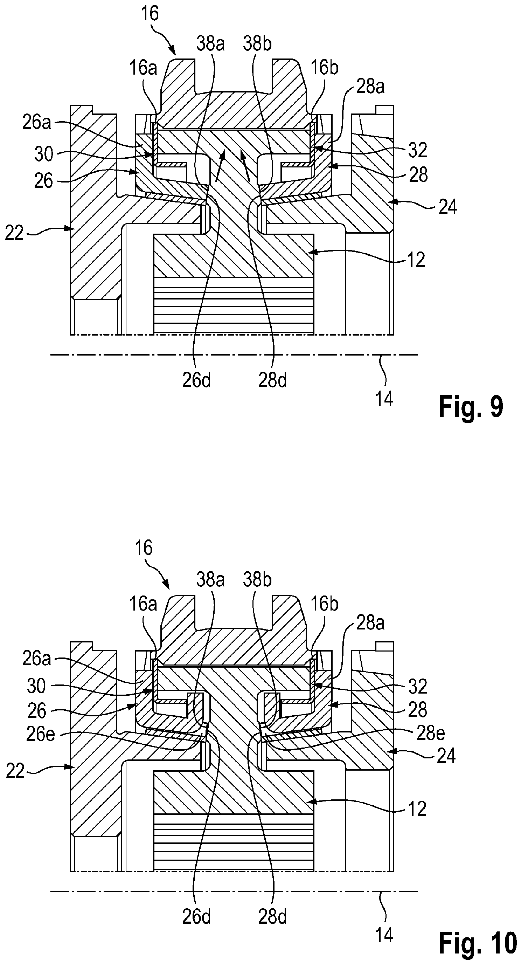

Diese Anlageflächen 26d, 28d können dabei als axial innere Stirnflächen der Synchronringe 26, 28 ausgebildet sein (siehe Figur 9).

Alternativ können die Anlageflächen 26d, 28d an speziell dafür ausgebildeten Axialvorsprüngen 26e, 28e der Synchronringe 26, 28 angeordnet sein. Dann sind die Anlageflächen 26d, 28d am Umfang der Synchronringes 26, 28 nicht umlaufend (siehe Figur 10).

Darüber hinaus sind die Synchronringe 26, 28 jeweils an ihrer radialen Außenseite an der Nabe 12 gelagert, wobei hierfür an der Nabe Abschnitte 40a, 40b vorgesehen sind, die den zugeordneten Synchronring 26, 28 in Axialrichtung und in Radialrichtung übergreifen.

In der dargestellten Ausführungsform sind diese Abschnitte 40a, 40b umfangsmäßig nicht umlaufend und greifen in zugeordnete Ausnehmungen 26f, 28f der Synchronringe 26, 28 ein.

Eine solche Lagerung der Synchronringe 26, 28 wird auch als Renault-Indexierung bezeichnet.

Die Synchronisierungseinheit 10 funktioniert folgendermaßen.

In einer Neutralstellung der Synchronisierungseinheit 10 ist der Anlageabschnitt 30b des ersten Rückstellfederelements 30 dem Sperrverzahnungsabschnitt 26a des ersten Synchronrings 26 benachbart angeordnet.

Gleiches gilt für den Anlageabschnitt 32b des zweiten Rückstellfederelements 32, der dem Sperrverzahnungsabschnitt 28a des zweiten Synchronrings 28 benachbart angeordnet ist.

Ferner sind die Rückstellfederelemente 30, 32 in den jeweils zugeordneten Radialaufnahmen 26b, 28b aufgenommen.

Die Synchronringe 26, 28 liegen axial außenseitig an den jeweils zugeordneten Rückstellfederelementen 30, 32 an, sind also in Axialrichtung so nahe wie möglich an der Nabe 12 angeordnet.

Was die Kopplung der Rückstellfederelemente 30, 32 mit der Nabe 12 anbelangt, so greifen die Laschen 30c, 30d flächig an den Wänden 35a, 35b an.

Die Laschen 32c, 32d greifen flächig an den Wänden 35c, 35d an.

Ferner hintergreift die Lasche 30f den Bereich 36a und die Lasche 32f den Bereich 36b.

Zudem liegen die Anlageabschnitte 30b, 32b an entgegengesetzten Axialenden der Schiebemuffe 16 an.

Wird nun die Schiebemuffe 16 beispielsweise in Richtung des ersten Kupplungskörpers 22 betätigt, um einen ersten Gang zu schalten, der dem ersten Kupplungskörper 22 zugeordnet ist, so wirkt das Rückstellfederelement 30 zunächst als Vorsynchronisierungseinheit.

Es wird dabei das Rückstellfederelement 30 über eine an der Schiebemuffe 16 vorgesehene Fase 16a in Axialrichtung auf den zugeordneten Synchronring 26 zubewegt. Es kommt folglich der Anlageabschnitt 30b in Kontakt mit dem Sperrverzahnungsabschnitt 26a.

Dadurch wird der Synchronring 26 entlang der Mittelachse 14 verschoben, bis der Reibkonusabschnitt des Synchronrings 26 in Reibkontakt mit dem zugeordneten Reibkonusabschnitt am Kupplungskörper 22 gelangt.

Dieser Reibkontakt bewirkt ein auf den Synchronring 26 wirkendes Reibmoment, welches den Synchronring 26 in seine Sperrstellung verdreht, die auch als Indexstellung bezeichnet wird. In dieser Stellung stehen sich die Zähne des Sperrverzahnungsabschnitts 26a des Synchronrings 26 und die Zähne der Innenverzahnung 20 der Schiebemuffe 16 in Axialrichtung zumindest abschnittsweise gegenüber.

Wird die Schiebemuffe 26 entlang der Mittelachse 14 weiterbewegt, wird über die Fase 16a das Rückstellfederelement 30 elastisch nach radial innen verformt bis die Stirnflächen der Innenverzahnung 20 der Schiebemuffe 16 an den zugeordneten Stirnflächen der Zähne des Sperrverzahnungsabschnitts 26a anliegen. Die Synchronisierungseinheit 10 ist somit in ihrer Sperrstellung.

Die über die Schiebemuffe 16 eingebrachte und zwischen dem Reibkonusabschnitt des Synchronrings 26 und dem Reibkonusabschnitt des Kupplungskörpers 22 wirkende Axialkraft führt nun zu einer Synchronisierung der Drehzahlen der Nabe 12 und des Kupplungskörpers 22.

Ist diese Synchronisation abgeschlossen, kann die Schiebemuffe 16 entlang der Mittelachse 14 weiter in Richtung Kupplungskörper 22 verschoben werden. Dabei wird der Synchronring 26 umfangsmäßig verdreht und die Zähne der Innenverzahnung 20 der Schiebemuffe 16 können mit den Zähnen des Sperrverzahnungsabschnitts 26a kooperieren und in die Zähne des Kupplungskörpers 22 eingreifen. Das Rückstellfederelement 30 gleitet gleichzeitig weiter an der Fase 16a nach radial innen.

Mit Bezug auf die Nabe 12 gleitet bei dieser Bewegung die Lasche 30f relativ zum Bereich 36a um ein gewisses Maß in Richtung des ersten Kupplungskörpers 22. Dabei wird sie nach radial außen elastisch verformt.

Gleichzeitig gleiten die Laschen 30c, 30d an den zugeordneten Wänden 35a, 35b in Richtung des ersten Kupplungskörpers 22. Dadurch werden die Laschen 30c, 30d unter Ausnutzung der Elastizität des Rückstellfederelements 30 aneinander angenähert.

Das Rückstellfederelement 30 steht somit unter Spannung, wenn es ausgelenkt ist.

Wenn die Schiebemuffe 16 soweit entlang der Mittelachse 14 verschoben ist, dass die Stirnflächen der Zähne des Sperrverzahnungsabschnitts 26a des Synchronrings 26 nicht mehr an den Stirnflächen der Innenverzahnung 20 der Schiebemuffe 16 anliegen, wird der Synchronring 26 nicht mehr mit einer Axialkraft beaufschlagt.

Der Synchronring 26 wird dann durch das Rückstellfederelement 30 in seine Lüftungsstellung zurückbewegt. Diese entspricht der zuvor beschriebenen Neutralstellung der Synchronisierungseinheit 10, in der der Synchronring 26 vom Kupplungskörper 22 entkoppelt ist.

Man spricht in diesem Zusammenhang auch von der Rückstellphase der Synchronisierungseinheit 10.

Das kann einerseits der Fall sein, wenn der dem ersten Kupplungskörper 22 zugeordnete Gang eingelegt ist, also die Innenverzahnung 20 der Schiebemuffe 16 die Außenverzahnung 18 der Nabe 12 mit einer Verzahnung am ersten Kupplungskörper 22 koppelt, und andererseits, wenn die Schiebemuffe 16 in ihre Neutralstellung zurückgestellt wird.

Die Rückstellung des Synchronringes 26 erfolgt dabei einerseits dadurch, dass die Laschen 30c, 30d, die ja zuvor durch eine Verschiebung der Schiebemuffe 16 aneinander angenähert wurden, wieder in ihren weiter voneinander beabstandeten Ausgangszustand streben.

Dabei gleiten sie wieder entlang der zugeordneten Wände 35a, 35b, sodass gleichzeitig das Rückstellfederelement 30 in Richtung der Nabe 12 bewegt wird.

Gleiches gilt für die Lasche 30f, die wieder in ihren ursprünglichen Zustand zurück strebt.

Eine Betätigung der Schiebemuffe 16 in Richtung des zweiten Kupplungskörpers 24 erfolgt analog, sodass auf eine gesonderte Beschreibung verzichtet wird.

Mittels des zweiten Kupplungskörpers 24 wird ein dem zweiten Kupplungskörper 24 zugeordneter Gang eingelegt.

Das Rückstellfederelement 32 wirkt dabei mit einer Fase 16b der Schiebemuffe 16 zusammen.

## Patentansprüche

1. Synchronisierungseinheit (10) für ein Schaltgetriebe, mit
einer drehfest und axialfest mit einer Getriebewelle koppelbaren Nabe (12), die um eine Mittelachse (14) der Synchronisierungseinheit (10) drehbar ist,
einer drehfest und axial verschiebbar mit der Nabe (12) gekoppelten Schiebemuffe (16) und mit
einem Synchronring (26, 28), der durch eine axiale Betätigung der Schiebemuffe (16) mit einem Gangrad koppelbar ist,
wobei ein Rückstellfederelement (30, 32) vorgesehen ist, das sowohl mit dem Synchronring (26, 28) als auch mit der Nabe (12) gekoppelt ist,
**dadurch gekennzeichnet, dass** das Rückstellfederelement (30, 32) ringförmig ist.

2. Synchronisierungseinheit (10) nach Anspruch 1, **dadurch gekennzeichnet, dass** das Rückstellfederelement (30, 32) als umgeformtes Blech gebildet ist.

3. Synchronisierungseinheit (10) nach einem der vorhergehenden Ansprüche, **dadurch gekennzeichnet, dass** das Rückstellfederelement (30, 32) einen im Wesentlichen zylindermantelförmigen oder kegelmantelförmigen Lagerabschnitt (30a, 32a) umfasst und der Lagerabschnitt (30a, 32a) an der Nabe (12) anliegt.

4. Synchronisierungseinheit (10) nach einem der vorhergehenden Ansprüche, **dadurch gekennzeichnet, dass** das Rückstellfederelement (30, 32) einen sich im Wesentlichen in Radialrichtung erstreckenden Anlageabschnitt (30b, 32b) aufweist und der Anlageabschnitt (30b, 32b) einem Sperrverzahnungsabschnitt (26a, 28a) des Synchronrings (26, 28) benachbart angeordnet ist.

5. Synchronisierungseinheit (10) nach einem der vorhergehenden Ansprüche, **dadurch gekennzeichnet, dass** das Rückstellfederelement (30, 32) in Umfangsrichtung mit der Nabe (12) gekoppelt ist, indem zumindest eine im Wesentlichen radial vom Rückstellfederelement (30, 32) abstehende Lasche (30c, 30d, 32c, 32d) in eine Ausnehmung (34a, 34b) an der Nabe (12) eingreift.

6. Synchronisierungseinheit (10) nach Anspruch 5, **dadurch gekennzeichnet, dass** das Rückstellfederelement (30, 32) zwei im Wesentlichen radial abstehende Laschen (30c, 30d, 32c, 32d) aufweist und die Laschen (30c, 30d, 32c, 32d) jeweils an entgegengesetzten, in Umfangsrichtung weisenden Wänden (35a, 35b, 35c, 35d) der Ausnehmung (34a, 34b) an der Nabe (12) anliegen.

7. Synchronisierungseinheit (10) nach Anspruch 5 oder 6, **dadurch gekennzeichnet, dass** zumindest eine der in Umfangsrichtung weisenden Wände (35a, 35b, 35c, 35d) gegenüber einer Axialrichtung geneigt ist, insbesondere wobei beide in Umfangsrichtung weisenden Wände (35a, 35b, 35c, 35d) gegenüber einer Axialrichtung geneigt sind, sodass ein in Umfangsrichtung gemessener Abstand (a) der in Umfangsrichtung weisenden Wände (35a, 35b, 35c, 35d) an einem dem Rückstellfederelement (30, 32) benachbarten Axialende der Nabe (12) kleiner ist als an einem vom Rückstellfederelement (30, 32) weg weisenden Axialende der Nabe (12).

8. Synchronisierungseinheit (10) nach einem der Ansprüche 5 bis 7, **dadurch gekennzeichnet, dass** das Rückstellfederelement (30, 32) eine Umfangslücke (30e, 32e) aufweist und die Lasche (30c, 30d, 32c, 32d) bzw. die Laschen (30c, 30d, 32c, 32d) an einem Rand der Umfangslücke (30e, 32e) positioniert ist bzw. sind.

9. Synchronisierungseinheit (10) nach einem der vorhergehenden Ansprüche, **dadurch gekennzeichnet, dass** das Rückstellfederelement (30, 32) in Axialrichtung mit der Nabe (12) gekoppelt ist, indem zumindest eine im Wesentlichen axial vom Rückstellfederelement (30, 32) abstehende Lasche (30f, 32f) einen Bereich (36a, 36b) der Nabe (12) in Axialrichtung hintergreift.

10. Synchronisierungseinheit (10) nach Anspruch 9 sowie einem der Ansprüche 5 bis 8, **dadurch gekennzeichnet, dass** die im Wesentlichen axial vom Rückstellfederelement (30, 32) abstehende Lasche (30f, 32f) und die im Wesentlichen radial vom Rückstellfederelement abstehende Lasche (30c, 30d, 32c, 32d) bzw. abstehenden Laschen (30c, 30d, 32c, 32d) im Wesentlichen diametral entgegengesetzt angeordnet sind.

11. Synchronisierungseinheit (10) nach einem der vorhergehenden Ansprüche, **dadurch gekennzeichnet, dass** das Rückstellfederelement (30, 32) in eine Radialaufnahme (26b, 28b) am Synchronring (26, 28) eingreift.

12. Synchronisierungseinheit (10) nach Anspruch 11, **dadurch gekennzeichnet, dass** die Radialaufnahme (26b, 28b) durch einen vollständig oder segmentiert umlaufenden Synchronringbund oder durch zumindest einen Haltenocken (26c, 28c) gebildet ist.

13. Synchronisierungseinheit (10) nach einem der vorhergehenden Ansprüche, **dadurch gekennzeichnet, dass**
zwei Synchronringe (26, 28), die durch eine axiale Betätigung der Schiebemuffe (16) wahlweise mit einem jeweils zugeordneten Gangrad koppelbar sind, und
zwei Rückstellfederelemente (30, 32) vorgesehen sind,
wobei ein erstes der Rückstellfederelemente (30, 32) mit einem ersten der Synchronringe (26, 28) und mit der Nabe (12) gekoppelt ist und ein zweites der Rückstellfederelemente (30, 32) mit einem zweiten der Synchronringe (26, 28) und mit der Nabe (12) gekoppelt ist.

14. Synchronisierungseinheit (10) nach Anspruch 13, **dadurch gekennzeichnet, dass** die Rückstellfederelemente (30, 32) als Gleichteile ausgeführt sind und insbesondere um 180° gegeneinander verdreht sowie bezüglich einer senkrecht zur Mittelachse (14) verlaufenden Mittelebene der Synchronisierungseinheit (10) gespiegelt verbaut sind.

## Claims

1. A synchronizing unit (10) for a manual transmission, comprising
a hub (12) which is adapted to be coupled to a transmission shaft so as to prevent relative rotation and axial movement and which is rotatable about a central axis (14) of the synchronizing unit (10),
a sliding sleeve (16) coupled to the hub (12) so as to prevent relative rotation and so as to be axially displaceable, and comprising
a synchronizer ring (26, 28) which is adapted to be coupled to a speed change gear by an axial actuation of the sliding sleeve (16),
wherein a return spring element (30, 32) is provided which is coupled to both the synchronizer ring (26, 28) and the hub (12),
**characterized in that** the return spring element (30, 32) is ring-shaped.

2. The synchronizing unit (10) according to claim 1, **characterized in that** the return spring element (30, 32) is in the form of a reshaped metal sheet.

3. The synchronizing unit (10) according to either of the preceding claims, **characterized in that** the return spring element (30, 32) comprises a bearing portion (30a, 32a) substantially in the shape of an envelope of cylinder or an envelope of cone, and the bearing portion (30a, 32a) rests against the hub (12).

4. The synchronizing unit (10) according to any of the preceding claims, **characterized in that** the return spring element (30, 32) includes an engagement portion (30b, 32b) extending substantially in the radial direction and the engagement portion (30b, 32b) is arranged adjacent to a locking toothing portion (26a, 28a) of the synchronizer ring (26, 28).

5. The synchronizing unit (10) according to any of the preceding claims, **characterized in that** the return spring element (30, 32) is coupled to the hub (12) in the circumferential direction **in that** at least one tab (30c, 30d, 32c, 32d) projecting substantially radially from the return spring element (30, 32) engages with a recess (34a, 34b) on the hub (12).

6. The synchronizing unit (10) according to claim 5, **characterized in that** the return spring element (30, 32) includes two substantially radially projecting tabs (30c, 30d, 32c, 32d), and the tabs (30c, 30d, 32c, 32d) each rest against opposing, circumferentially facing walls (35a, 35b, 35c, 35d) of the recess (34a, 34b) on the hub (12).

7. The synchronizing unit (10) according to claim 5 or 6, **characterized in that** at least one of the circumferentially facing walls (35a, 35b, 35c, 35d) is inclined in relation to an axial direction, in particular wherein both circumferentially facing walls (35a, 35b, 35c, 35d) are inclined in relation to an axial direction, so that a distance (a), measured in the circumferential direction, of the circumferentially facing walls (35a, 35b, 35c, 35d) is smaller at an axial end of the hub (12) adjacent to the return spring element (30, 32) than at an axial end of the hub (12) facing away from the return spring element (30, 32).

8. The synchronizing unit (10) according to any of claims 5 to 7, **characterized in that** the return spring element (30, 32) includes a circumferential gap (30e, 32e) and the tab (30c, 30d, 32c, 32d) or tabs (30c, 30d, 32c, 32d) is or are positioned at an edge of the circumferential gap (30e, 32e).

9. The synchronizing unit (10) according to any of the preceding claims, **characterized in that** the return spring element (30, 32) is coupled to the hub (12) in the axial direction **in that** at least one tab (30f, 32f) projecting substantially axially from the return spring element (30, 32) engages behind an area (36a, 36b) of the hub (12) in the axial direction.

10. The synchronizing unit (10) according to claim 9 and any of claims 5 to 8, **characterized in that** the tab (30f, 32f) projecting substantially axially from the return spring element (30, 32) and the tab (30c, 30d, 32c, 32d) or tabs (30c, 30d, 32c, 32d) projecting substantially radially from the return spring element are arranged substantially diametrically opposite.

11. The synchronizing unit (10) according to any of the preceding claims, **characterized in that** the return spring element (30, 32) engages with a radial retainer (26b, 28b) on the synchronizer ring (26, 28).

12. The synchronizing unit (10) according to claim 11, **characterized in that** the radial retainer (26b, 28b) is formed by a completely or segmentally encircling synchronizer ring collar or by at least one holding cam (26c, 28c).

13. The synchronizing unit (10) according to any of the preceding claims, **characterized in that**
two synchronizer rings (26, 28), which are adapted to be selectively coupled to a respectively associated speed change gear by an axial actuation of the sliding sleeve (16), and
two return spring elements (30, 32) are provided,
wherein a first one of the return spring elements (30, 32) is coupled to a first one of the synchronizer rings (26, 28) and to the hub (12), and a second one of the return spring elements (30, 32) is coupled to a second one of the synchronizer rings (26, 28) and to the hub (12).

14. The synchronizing unit (10) according to claim 13, **characterized in that** the return spring elements (30, 32) are realized in the form of identical parts and, in particular, are rotated by 180 degrees in relation to each other and are installed so as to be mirrored with respect to a center plane of the synchronizing unit (10) extending perpendicularly to the central axis (14).

## Revendications

1. Unité de synchronisation (10) pour boîte de vitesses, comprenant
un moyeu (12) qui est apte à être couplé de manière solidaire en rotation et axialement fixe à un arbre de boîte de vitesses et qui est mobile en rotation autour d'un axe médian (14) de l'unité de synchronisation (10),
un manchon coulissant (16) couplé au moyeu (12) de manière solidaire en rotation et axialement déplaçable, et
une bague de synchronisation (26, 28) qui est apte à être couplée à un pignon par un actionnement axial du manchon coulissant (16),
un élément de ressort de rappel (30, 32) étant prévu, lequel est couplé à la bague de synchronisation (26, 28) et au moyeu (12),
**caractérisée en ce que** l'élément de ressort de rappel (30, 32) est annulaire.

2. Unité de synchronisation (10) selon la revendication 1, **caractérisée en ce que** l'élément de ressort de rappel (30, 32) est réalisé sous forme de tôle refaçonnée.

3. Unité de synchronisation (10) selon l'une des revendications précédentes, **caractérisée en ce que** l'élément de ressort de rappel (30, 32) comprend un tronçon de support (30a, 32a) sensiblement en forme d'enveloppe de cylindre ou d'enveloppe de cône, et **en ce que** le tronçon de support (30a, 32a) est en appui contre le moyeu (12).

4. Unité de synchronisation (10) selon l'une des revendications précédentes, **caractérisée en ce que** l'élément de ressort de rappel (30, 32) présente un tronçon d'appui (30b, 32b) qui s'étend sensiblement dans le sens radial, et **en ce que** le tronçon d'appui (30b, 32b) est agencé adjacent à un tronçon de denture de blocage (26a, 28a) de la bague de synchronisation (26, 28).

5. Unité de synchronisation (10) selon l'une des revendications précédentes, **caractérisée en ce que** l'élément de ressort de rappel (30, 32) est couplé au moyeu (12) dans le sens circonférentiel **en ce qu'**au moins une patte (30c, 30d, 32c, 32d) faisant saille sensiblement radialement de l'élément de ressort de rappel (30, 32) s'engage dans un évidement (34a, 34b) sur le moyeu (12).

6. Unité de synchronisation (10) selon la revendication 5, **caractérisée en ce que** l'élément de ressort de rappel (30, 32) présente deux pattes (30c, 30d, 32c, 32d) sensiblement radialement en saillie, et **en ce que** les pattes (30c, 30d, 32c, 32d) sont chacune en appui sur le moyeu (12) sur des parois opposées (35a, 35b, 35c, 35d) de l'évidement (34a, 34b) tournées vers le sens circonférentiel.

7. Unité de synchronisation (10) selon la revendication 5 ou 6, **caractérisée en ce qu'**au moins l'une des parois (35a, 35b, 35c, 35d) tournées vers le sens circonférentiel est inclinée par rapport à un sens axial, les deux parois (35a, 35b, 35c, 35d) tournées vers le sens circonférentiel étant en particulier inclinées par rapport à un sens axial, de sorte qu'un écart (a) mesuré dans le sens circonférentiel des parois (35a, 35b, 35c, 35d) tournées vers le sens circonférentiel à une extrémité axiale du moyeu (12) adjacente à l'élément de ressort de rappel (30, 32) est inférieur à celui à une extrémité axiale du moyeu (12) détournée de l'élément de ressort de rappel (30, 32).

8. Unité de synchronisation (10) selon l'une des revendications 5 à 7, **caractérisée en ce que** l'élément de ressort de rappel (30, 32) présente un vide circonférentiel (30e, 32e) et **en ce que** la patte (30c, 30d, 32c, 32d) ou les pattes (30c, 30d, 32c, 32d) est/sont positionnée(s) sur un bord du vide circonférentiel (30e, 32e).

9. Unité de synchronisation (10) selon l'une des revendications précédentes, **caractérisée en ce que** l'élément de ressort de rappel (30, 32) est couplé au moyeu (12) dans le sens axial **en ce qu'**au moins une patte (30f, 32f) faisant saillie sensiblement axialement de l'élément de ressort de rappel (30, 32) s'engage derrière une zone (36a, 36b) du moyeu (12) dans le sens axial.

10. Unité de synchronisation (10) selon la revendication 9 et selon l'une des revendications 5 à 8, **caractérisée en ce que** la patte (30f, 32f) faisant saillie sensiblement axialement de l'élément de ressort de rappel (30, 32) et la patte (30c, 30d, 32c, 32d) ou les pattes (30c, 30d, 32c, 32d) faisant saillie sensiblement radialement de l'élément de ressort de rappel sont agencées sensiblement diamétralement opposées.

11. Unité de synchronisation (10) selon l'une des revendications précédentes, **caractérisée en ce que** l'élément de ressort de rappel (30, 32) s'engage dans un logement radial (26b, 28b) sur la bague de synchronisation (26, 28).

12. Unité de synchronisation (10) selon la revendication 11, **caractérisée en ce que** le logement radial (26b, 28b) est formé par un collet de bague de synchronisation entièrement périphérique ou périphérique par segments ou par au moins une came de retenue (26c, 28c).

13. Unité de synchronisation (10) selon l'une des revendications précédentes, **caractérisé en ce que**
il est prévu deux bagues de synchronisation (26, 28) qui sont aptes à être sélectivement couplées à un pignon associé respectif par un actionnement axial du manchon coulissant (16), et
deux éléments de ressort de rappel (30, 32),
un premier des éléments de ressort de rappel (30, 32) étant couplé à une première des bagues de synchronisation (26, 28) et au moyeu (12), et un deuxième des éléments de ressort de rappel (30, 32) étant couplé à une deuxième des bagues de synchronisation (26, 28) et au moyeu (12).

14. Unité de synchronisation (10) selon la revendication 13, **caractérisée en ce que** les éléments de ressort de rappel (30, 32) sont réalisés sous forme de pièces identiques et sont en particulier tournés sur 180° les uns par rapport aux autres et sont installés de manière reflétée par rapport à un plan médian de l'unité de synchronisation (10) qui s'étend perpendiculairement à l'axe médian (14).
